# DEMANDE DE BREVET EUROPEEN

(11) **EP 4 484 771 A1**
(43) Date de publication de la demande: **01.01.2025**
(21) Numéro de dépôt: 24185108.8
(22) Date de dépôt: 27.06.2024
(51) Int. Cl.: F16B 25/00, F16B 25/10, F16B 33/02, F16B 35/00

(54) **BOULON AUTO-PERCEUR**

(30) Priorité: 30.06.2023 FR 2306953
(71) Demandeur: Faynot Industrie SA, 08800 Thilay (FR)
(72) Inventeur: GISSINGER, Jean-Edouard, 08000 Charleville-Mezières (FR); THEVENIN, Etienne, 08000 Charleville-Mezières (FR)
(74) Mandataire: Ipsilon

(57) **Abrégé**

L'invention concerne un boulon auto-perceur (100) comprenant une vis (1) auto-perceuse et un écrou (200) apte à être monté sur la vis (1) auto-perceuse, ladite vis (1) auto-perceuse comportant un corps (2) possédant au moins une zone filetée et prolongé par une pointe foret (3) dotée d'une extrémité lisse (4) et de forme pointue.

Selon l'invention, la pointe foret (3) comporte un filetage (6) pouvant accueillir l'écrou (200) de sorte que ledit écrou (200) puisse être vissé autour de ladite pointe foret (3).

## Description

La présente invention concerne un boulon auto-perceur. Afin de lever toute ambiguïté, un tel boulon associe une vis auto-perceuse et un écrou apte à être monté autour de ladite vis.

Pour toute la suite du texte, les expressions « boulon » et « boulon auto-perceur » sont équivalentes.

Une vis auto-perceuse est très souvent utilisée pour réaliser un trou directement dans un matériau pouvant par exemple être du métal ou du bois, sans avoir à effectuer d'autres opérations préalables de préparation dudit matériau ou de pré-perçage de celui-ci, et donc sans avoir recours à d'autres outils. Une vis auto-perceuse se différencie des autres catégories de vis grâce à sa pointe en forme de foret, et à un filetage hélicoïdal.

La demande de brevet FR1462009 se rapporte à des vis pouvant recevoir un écrou, et capables de percer et/ou de tarauder une tôle d'épaisseur notable sans que le filetage destiné à l'écrou ne soit endommagé, ce qui fait que l'on peut :
- facilement enfoncer la vis à travers des pièces de tôle sans qu'il ne soit nécessaire de percer ou de tarauder préalablement celles-ci,
- appliquer facilement un écrou pour fixer les pièces dans leur position d'assemblage.

Or, un inconvénient lié aux vis décrites dans ce document est la limitation de l'épaisseur des supports à assembler. En effet, ces vis ont été conçues pour percer et/ou tarauder des tôles fines exclusivement, du fait de la géométrie de la portion de filets pleins continus. De plus, ces vis ne sont pas prévues pour des supports en bois, ou plus généralement pour des supports réalisés dans d'autres matériaux que des tôles.

Un boulon auto-perceur selon l'invention s'affranchit des principaux inconvénients rencontrés avec les boulons de l'état de la technique.

L'invention a pour objet un boulon auto-perceur comprenant une vis auto-perceuse et un écrou apte à être monté sur la vis auto-perceuse, ladite vis auto-perceuse comportant un corps possédant au moins une zone filetée et prolongé par une pointe foret dotée d'une extrémité lisse et de forme pointue.

Selon l'invention, la pointe foret comporte un filetage pouvant accueillir l'écrou de sorte que ledit écrou puisse être vissé autour de la pointe foret. La principale originalité d'un boulon auto-perceur selon l'invention, est que la pointe foret possède un filetage sur lequel un écrou peut être vissé. La vis possède une extrémité en pointe, qui est lisse et qui peut par exemple être de forme conique ou pyramidale, lui permettant d'être auto-perceuse. Le filetage de la pointe foret peut être bien marqué, moyennement marqué ou faiblement marqué. Il suffit qu'il soit marqué pour permettre à l'écrou d'être vissé autour de cette pointe foret. L'extrémité lisse possède préférentiellement des lèvres de coupe formées à partir de rainures pour faciliter la fonction de perçage du boulon. Typiquement, le filetage de la pointe foret est prolongé jusqu'à l'extrémité lisse, autrement dit la pointe foret est dépourvue de portion non filetée adjacente à l'extrémité lisse. De façon avantageuse, la vis auto-perceuse possède un moyen d'entrainement placé à une extrémité de la vis qui est opposée à celle possédant l'extrémité pointue et lisse. Ce moyen d'entrainement possède une géométrie et/ou des reliefs qui sont destinés à interagir avec un organe de mise en rotation d'une machine électroportative, telle que par exemple une perceuse ou une chignole. Cet organe de mise en rotation peut par exemple être constitué par une mèche rotative. En variante, ce moyen d'entrainement peut être placé entre l'extrémité pointue et lisse et l'extrémité de la vis qui est opposée à celle possédant l'extrémité pointue et lisse.

Selon une caractéristique possible de l'invention, le corps fileté et la pointe foret présentent chacun un filetage identique, ledit corps fileté et ladite pointe foret possédant des diamètres intérieurs égaux. Pour cette configuration, le filetage du corps et le filetage de la pointe foret sont identiques, seule l'extrémité lisse et conique de la vis contribuant au perçage du matériau dur. De cette manière, une telle vis ne pourra percer que des épaisseurs de matériau dur, par exemple inférieure à 1 mm.

Selon une caractéristique possible de l'invention, le corps fileté présente un filetage formé et la pointe foret présente un filetage moyennement formé, ledit corps fileté et ladite pointe foret possédant des diamètres intérieurs égaux. Pour cette configuration, le diamètre extérieur du filetage de la pointe foret est inférieur au diamètre extérieur du filetage du corps de la vis, avec pour conséquence que l'extrémité lisse et conique et une partie de la pointe foret vont contribuer au perçage du matériau dur. De cette manière, une telle vis ne pourra percer que des épaisseurs de matériau dur inférieures à 2,5mm.

Selon une caractéristique possible de l'invention, le corps fileté présente un filetage formé et la pointe foret présente un filetage faiblement formé, ledit corps fileté et ladite pointe foret possédant un diamètre intérieur identique. Pour cette configuration, le diamètre extérieur du filetage de la pointe foret est très inférieur au diamètre extérieur du filetage du corps de la vis, avec pour conséquence que la pointe lisse et une grande partie de la pointe foret vont contribuer au perçage du matériau dur. De cette manière, une telle vis pourra percer des épaisseurs de matériau dur supérieures à 2,5mm.

Selon une caractéristique possible de l'invention, la pointe foret présente au moins une rainure s'étendant sur toute la longueur de ladite pointe et de l'extrémité, ladite rainure prenant naissance à la périphérie d'une première extrémité de la pointe foret en contact avec le corps fileté et s'étend jusqu'à une deuxième extrémité correspondant au bout de l'extrémité. La rainure de la vis d'un boulon selon l'invention, est équivalente à un retrait de matière fictif de la pointe foret et de l'extrémité. Cette rainure comporte une profondeur variable, qui croit progressivement depuis la première extrémité de la pointe foret jusqu'à la deuxième extrémité correspondant au bout de l'extrémité lisse et conique. La profondeur de la rainure correspond à sa dimension considérée le long d'un axe radial de la vis. Cette rainure agit comme une gorge permettant notamment d'évacuer le matériau dans lequel elle est vissée, lorsqu'elle est fixée dans ledit matériau à grande vitesse au moyen par exemple d'une perceuse motorisée. Avantageusement, le corps fileté comporte une rainure supplémentaire débouchant dans ladite rainure. Cette rainure supplémentaire permet de mieux évacuer le matériau.
Selon une autre caractéristique possible de l'invention, ladite rainure prend naissance à la périphérie d'une première extrémité du corps fileté et s'étend jusqu'à une deuxième extrémité correspondant au bout de l'extrémité. Dans ce cas, la rainure s'étend sur toute la longueur du corps fileté, de ladite pointe et de l'extrémité ; la rainure est équivalente à un retrait de matière fictif du corps fileté, de la pointe foret et de l'extrémité ; et la profondeur de la rainure croit progressivement depuis la première extrémité du corps fileté jusqu'à la deuxième extrémité correspondant au bout de l'extrémité lisse et conique.
Avantageusement, cette rainure est délimitée par des bords coupants, constituant des lèvres de coupe permettant de favoriser le perçage du matériau dans lequel elle va être fixée. La vis d'un boulon auto-perceur selon l'invention peut posséder deux rainures favorisant l'évacuation du matériau dans lequel elle a été fixée et favorisant également le perçage dudit matériau. L'extrémité lisse en pointe de la vis va également participer au perçage du matériau, et peut être configurée pour pouvoir percer plus ou moins profondément ledit matériau.
En effet :
- la pointe foret peut être filetée et peut constituer une parfaite extension du corps fileté sans que l'on puisse faire de différence entre ledit corps et ladite pointe foret. Pour cette configuration, le boulon ne pourra percer que de faibles épaisseurs de matériau dur tel que par exemple de l'acier, ou du bois.
- la pointe foret peut présenter un filetage moyennement formé, et dans ce cas l'épaisseur de matériaux durs que pourra percer le boulon sera supérieure.
- la pointe foret peut présenter un filetage faiblement formé (moins formé que le filetage moyennement formé), et dans ce cas le boulon pourra percer des épaisseurs de matériaux plus importantes.

La présence de la rainure a pour but de :
- rendre la pointe foret de la vis plus effilée que celles des vis auto-perceuses existantes, de manière à favoriser le perçage d'une épaisseur de matériau,
- d'évacuer une partie du matériau dans lequel est insérée la vis, lorsque celle-ci pivote autour de son axe de révolution pour réaliser l'opération de perçage,
- de favoriser le perçage d'un matériau grâce à la présence de bords coupants délimitant ladite rainure.

Selon une caractéristique possible de l'invention, l'extrémité de la vis comprend une paroi de forme conique et l'angle d'inclinaison de ladite paroi définissant cette extrémité par rapport à l'axe de révolution de la vis est compris entre 10° et 85°. Cet angle d'inclinaison est l'angle que fait une génératrice de la pointe lisse conique avec l'axe de révolution de ladite pointe conique. Cet angle est choisi en fonction des caractéristiques du matériau à percer et de l'épaisseur de celui-ci. Plus cet angle sera faible, plus la vis sera performante en matière de perçage d'un matériau.

Selon une caractéristique possible de l'invention, les bords de ladite au moins une rainure dans l'extrémité sont coupants, si bien que ladite extrémité définit des lèvres de coupe qui vont favoriser le perçage d'une épaisseur de matériau. Ces lèvres de coupe vont améliorer les conditions de perçage, tandis que le volume de la rainure va contribuer à l'évacuation du matériau creusé par ladite vis.

Selon une caractéristique possible de l'invention, la vis possède deux rainures disposées l'une par rapport à l'autre de façon diamétralement opposée, lesdites deux rainures étant séparées l'une de l'autre en étant distinctes. Selon une variante dans ce cas, les deux rainures sont rectilignes. Selon une autre variante dans ce cas, les deux rainures sont hélicoïdales. Ces deux rainures sont séparées l'une de l'autre par des épaisseurs du matériau constituant la vis. La présence de ces deux rainures va accentuer les effets produits par une seule rainure qui sont :
- favoriser l'opération de perçage du matériau dans lequel est destinée à être fixée la vis,
- favoriser l'évacuation du matériau qui aura été découpé lors de l'enfoncement en rotation de la pointe de la vis dans ledit matériau dur,
- rendre plus effilée la pointe foret de la vis auto-perceuse.

Selon une caractéristique possible de l'invention, l'extrémité de la vis comprend une embase tronconique élargie prolongée par un tronçon conique se terminant en pointe, l'angle d'inclinaison de l'embase tronconique par rapport à l'axe de révolution de ladite extrémité, étant inférieur à celui du tronçon conique par rapport audit axe. Pour cette configuration, l'extrémité lisse de la vis comprend des lèvres de coupe avec deux angles, l'une correspondant à l'embase élargie et l'autre correspondant au tronçon conique. De cette manière, le perçage d'un matériau dur comme par exemple un métal, sera plus aisé, les lèvres coupantes formées par le tronçon conique assurant une bonne pénétration de l'extrémité lisse dans ledit matériau dur et les lèvres coupantes formées par l'embase élargie assurant une bonne coupe de ce matériau dur.

Selon une caractéristique possible de l'invention, l'extrémité de la vis comprend une embase tronconique élargie prolongée par un tronçon conique se terminant en pointe, l'angle d'inclinaison de l'embase tronconique par rapport à l'axe de révolution de ladite extrémité étant supérieur à celui du tronçon conique par rapport audit axe.

Selon une caractéristique possible de l'invention, la vis auto-perceuse comprend au moins une gorge de rupture de sorte que ladite vis puisse être rompue au niveau de ladite gorge de rupture et ne puisse donc plus constituer une protubérance nuisible. En effet, dans certaines configurations, la vis d'un boulon auto-perceur selon l'invention peut saillir de façon très marquée derrière une épaisseur de matériau qu'elle a percé, et peut alors constituer :
- un élément d'accrochage, ou
- une pointe dangereuse, ou
- un élément d'encombrement pouvant contrarier l'implantation d'autres objets dans l'environnement immédiat de la vis.

La gorge de rupture donne ainsi la possibilité de rompre la vis afin de limiter voire d'éliminer son tronçon saillant.

Selon une caractéristique possible de l'invention, la ou une dite gorge de rupture est placée entre le corps fileté de la vis auto-perceuse et la pointe foret. Il s'agit d'un emplacement particulièrement adapté de la gorge de rupture dans un boulon auto-perceur selon l'invention, mais nullement limitatif.

Selon une caractéristique possible de l'invention, la vis auto-perceuse comprend au moins un élément d'élargissement saillant d'une surface externe de ladite vis et destiné à élargir un trou que ladite vis aura préalablement créé. Un tel élément d'élargissement peut par exemple être constitué d'une ailette, d'une dent ou d'une nervure. Lorsque la vis auto-perceuse est mise en rotation elle va créer un trou et lorsque l'élément d'élargissement va arriver au niveau dudit trou, il va élargir ledit trou en étant entrainé en rotation par ladite vis. Cette vis peut posséder plusieurs éléments d'élargissement répartis sur toute sa longueur, et/ou répartis sur sa circonférence.

On donne ci-après une description détaillée de plusieurs modes de réalisation préférés d'une vis selon l'invention, en se référant aux figures suivantes :
[Fig. 1] La figure 1 est une vue de côté d'un premier mode de réalisation d'un boulon auto-perceur selon l'invention,
[Fig. 2] La figure 2 est une vue de côté d'un deuxième mode de réalisation d'un boulon auto-perceur selon l'invention,
[Fig. 3] La figure 3 est une vue de côté d'un troisième mode de réalisation d'un boulon auto-perceur selon l'invention,
[Fig. 4] La figure 4 est une vue en coupe du premier mode de réalisation de la figure 1,
[Fig. 5] La figure 5 est une vue en coupe du deuxième mode de réalisation de la figure 2,
[Fig. 6] La figure 6 est une vue en coupe du troisième mode de réalisation de la figure 3,
[Fig. 7] La figure 7 est une vue en coupe d'une pointe foret cylindrique d'une vis selon l'invention,
[Fig. 8] La figure 8 est une vue en coupe d'une pointe foret conique d'une vis selon l'invention,
[Fig. 9] La figure 9 est une vue du dessus d'une vis selon l'invention,
[Fig. 10] La figure 10 est une vue schématique de côté d'un contour d'une pointe foret d'une vis selon l'invention pour laquelle la pointe est faiblement marquée,
[Fig. 11] La figure 11 est une vue schématique de côté d'un contour d'une pointe foret d'une vis d'un boulon selon l'invention pour laquelle la pointe est fortement marquée,
[Fig. 12] La figure 12 est une vue schématique de côté d'un contour d'une pointe foret d'une vis d'un boulon selon l'invention, présentant deux parties distinctes,

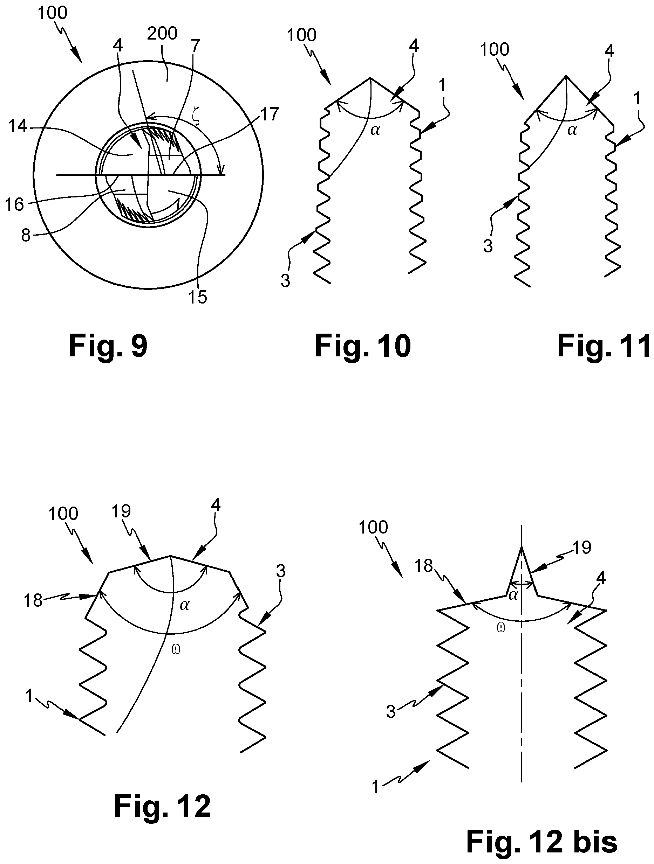

[Fig. 12bis] La figure 12bis est une vue schématique de côté d'un contour d'une pointe foret d'une vis d'un boulon selon l'invention, présentant deux parties distinctes dans un mode de réalisation qui est différent de celui qui est illustré à la figure 12,

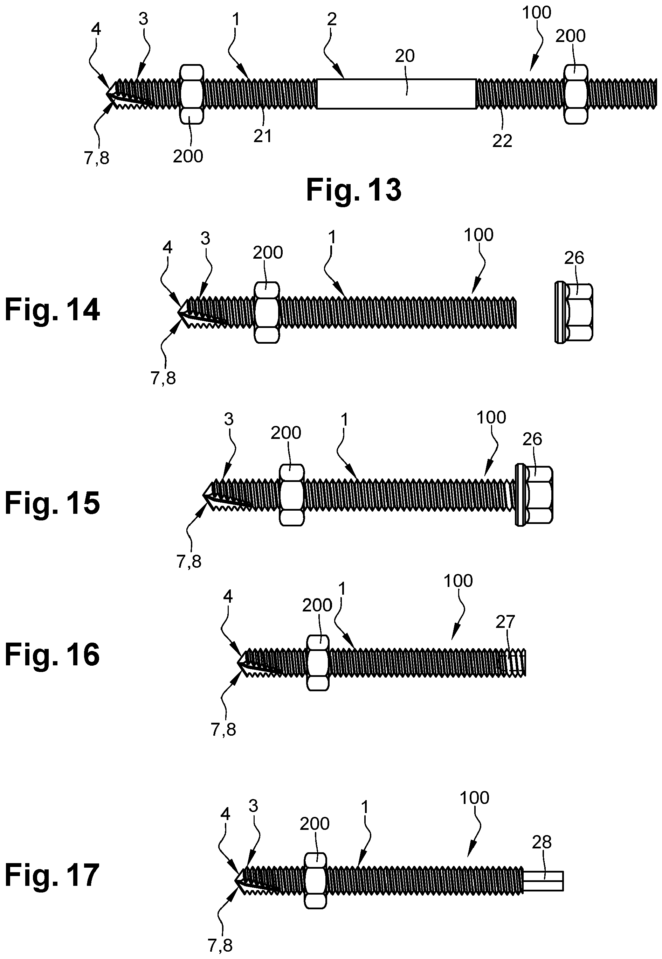

[Fig. 13] La figure 13 est une vue de côté d'un quatrième mode de réalisation d'une vis d'un boulon selon l'invention, montrant un corps de boulon avec deux parties filetées séparées d'une partie lisse
[Fig. 14] La figure 14 est une vue de côté d'un cinquième mode de réalisation d'une vis d'un boulon selon l'invention, montrant le boulon avec une tête taraudée séparée pour l'entrainement en rotation
[Fig. 15] La figure 15 est une vue de côté d'un sixième mode de réalisation d'une vis d'un boulon selon l'invention, montrant le boulon avec une tête taraudée séparée montée dessus
[Fig. 16] La figure 16 est une vue de côté d'un septième mode de réalisation d'une vis d'un boulon selon l'invention, montrant une empreinte d'entrainement à l'intérieur du corps du boulon
[Fig. 17] La figure 17 est une vue de côté d'un huitième mode de réalisation d'une vis d'un boulon selon l'invention, montrant un embout d'entrainement dans le prolongement du corps du boulon

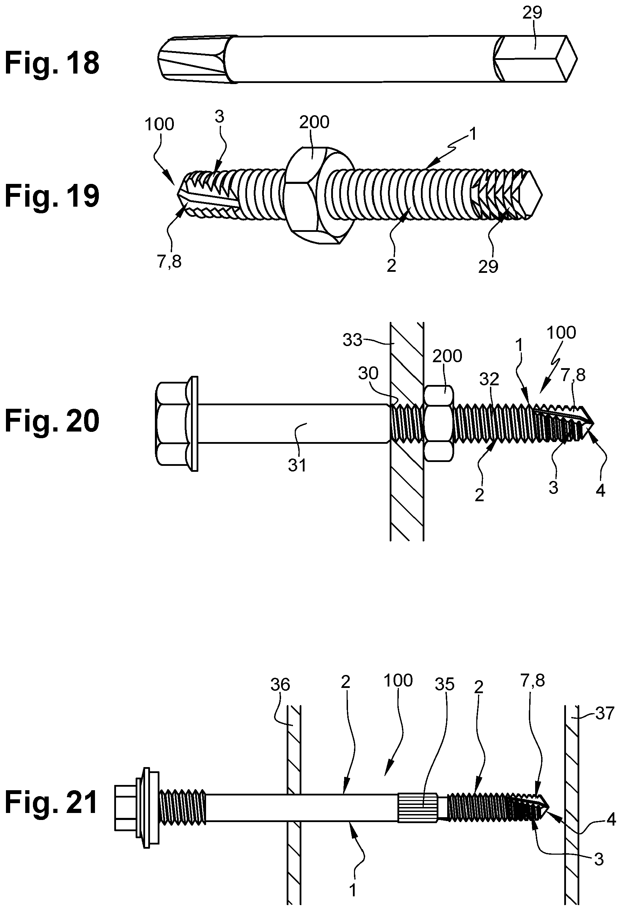

[Fig. 18] La figure 18 est une vue en montrant l'ébauche d'un boulon avec un embout d'entrainement dans le prolongement avant filetage
[Fig. 19] La figure 19 est la vue de la figure 18 après l'usinage final, montrant que l'embout d'entrainement est aussi fileté.
[Fig. 20] La figure 20 est une vue de côté d'un neuvième mode de réalisation d'une vis d'un boulon selon l'invention et d'une butée sur le corps du boulon,
[Fig. 21] La figure 21 est une vue de côté d'un dixième mode de réalisation d'une vis d'un boulon selon l'invention et de deux épaisseurs parallèles de matériau dur dans laquelle la vis est destinée à venir s'insérer, ladite vis n'ayant pas encore pénétré l'une desdites deux épaisseurs,

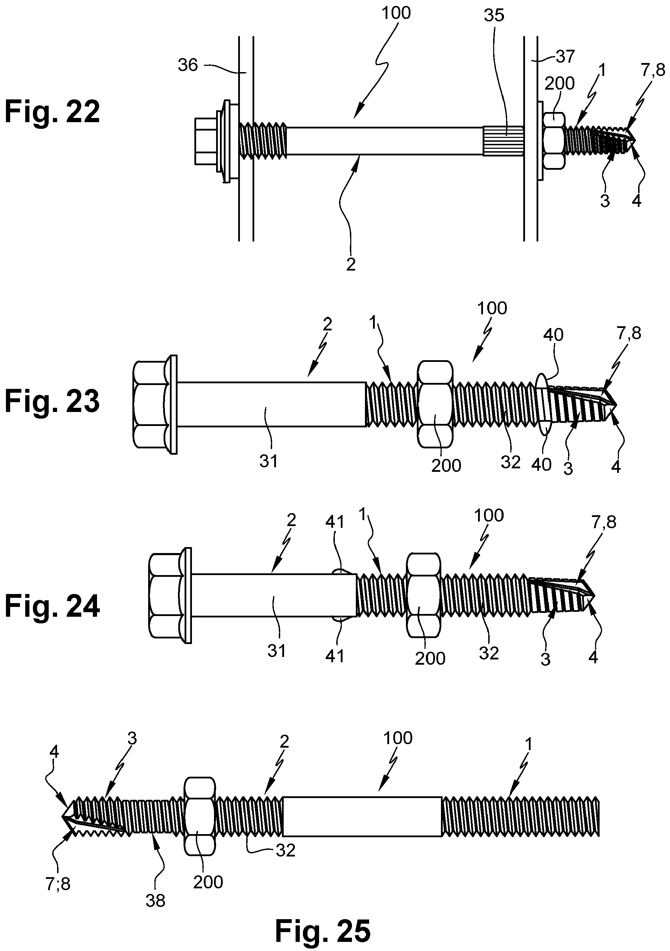

[Fig. 22] La figure 22 est la vue de la figure 21, la vis ayant fonction d'entretoise,
[Fig. 23] La figure 23 est une vue de côté d'un onzième mode de réalisation d'une vis d'un boulon selon l'invention, montrant des ailettes d'alésage entre la pointe foret et le corps du boulon
[Fig. 24] La figure 24 est une vue de côté d'un douzième mode de réalisation d'une vis d'un boulon selon l'invention, montrant des ailettes d'alésage sur le corps du boulon,
[Fig. 25] La figure 25 est une vue de côté d'un treizième mode de réalisation d'une vis d'un boulon selon l'invention, montrant une partie faiblement filetée entre la pointe foret et le corps fileté du boulon,

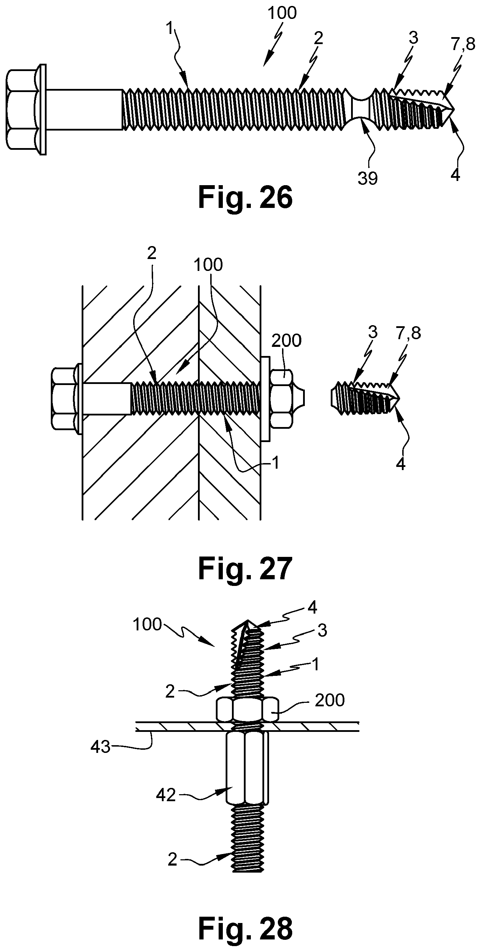

[Fig. 26] La figure 26 est une vue de côté d'un quatorzième mode de réalisation d'une vis d'un boulon selon l'invention, montrant une gorge de rupture entre la pointe foret et le corps du boulon,
[Fig. 27] La figure 27 est une vue de côté du quatorzième mode de réalisation de la figure 26, montrant le boulon avec la pointe foret cassée au niveau de la gorge de rupture,
[Fig. 28] La figure 28 est une vue de côté d'un quinzième mode de réalisation d'une vis d'un boulon selon l'invention,

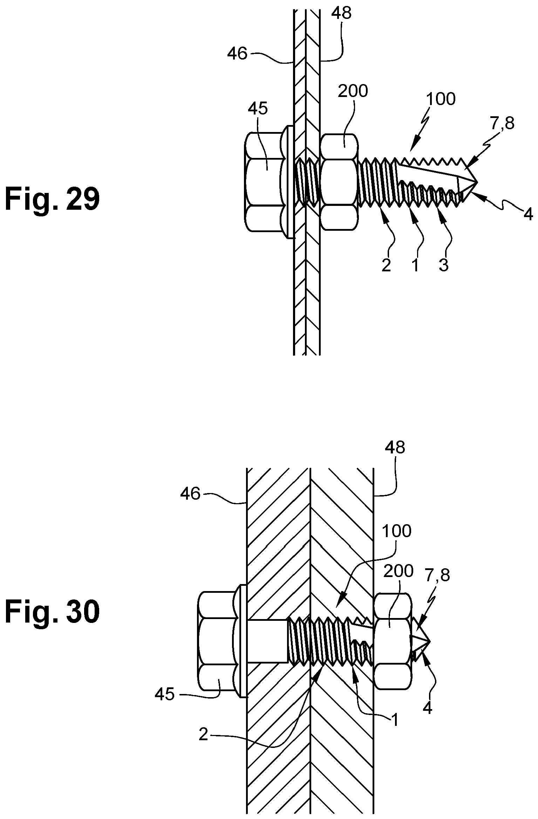

[Fig. 29] La figure 29 est une vue de côté d'un seizième mode de réalisation d'une vis selon l'invention, qui est insérée dans une épaisseur de matériau dur,
[Fig. 30] La figure 30 est une vue de côté d'un dix-septième mode de réalisation d'une vis selon l'invention, qui est insérée dans une épaisseur de matériau moyennement dur, montrant l'écrou vissé sur la pointe foret une fois l'assemblage réalisé.

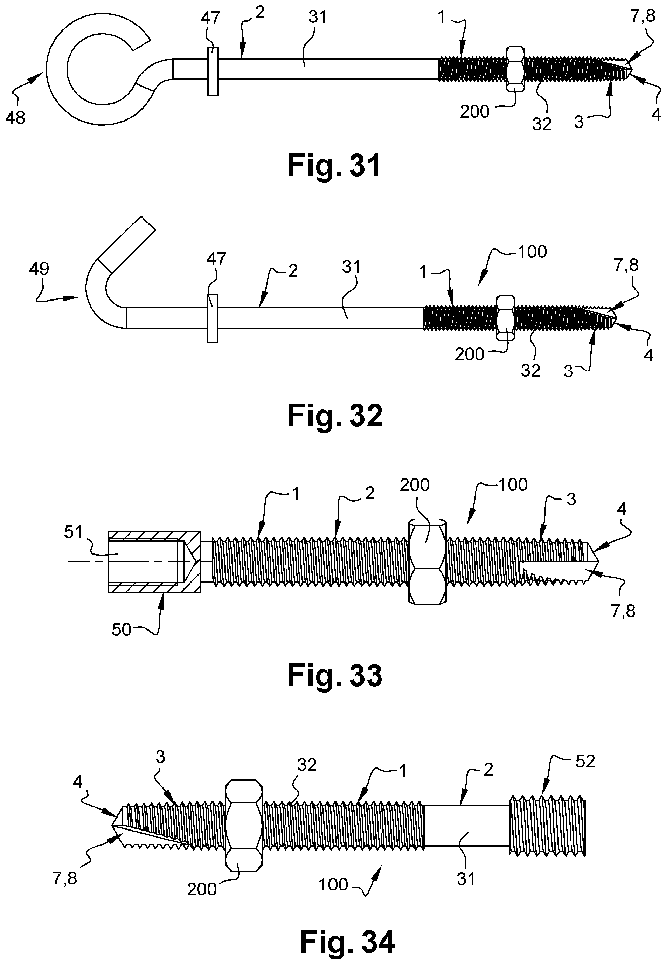

[Fig. 31] La figure 31 est une vue de côté d'un dix-huitième mode de réalisation d'une vis d'un boulon selon l'invention,
[Fig. 32] La figure 32 est une vue de côté d'un dix-neuvième mode de réalisation d'une vis d'un boulon selon l'invention,
[Fig. 33] La figure 33 est une vue de côté et partiellement en coupe d'un vingtième mode de réalisation d'une vis d'un boulon selon l'invention, montrant un embout d'entrainement dans le prolongement du corps du boulon
[Fig. 34] La figure 34 est une vue de côté d'un vingt-et-unième mode de réalisation d'une vis d'un boulon selon l'invention, montrant un embout d'entrainement dans le prolongement du corps du boulon

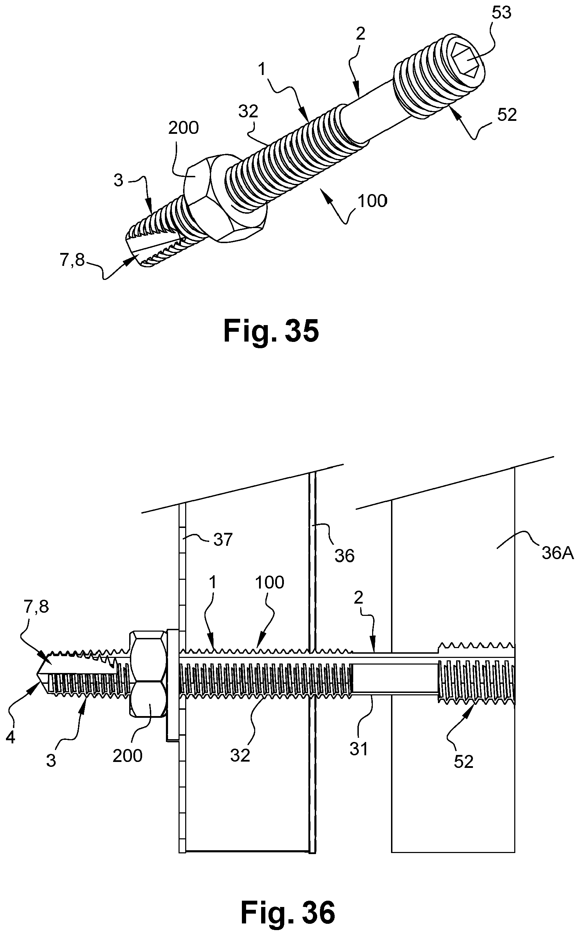

[Fig. 35] La figure 35 est une vue en perspective du vingt-et-unième mode de réalisation de la figure 34,
[Fig. 36] La figure 36 est la vue de la figure 34, un panneau ou un chevron étant vissé sur la tête filetée de la vis,

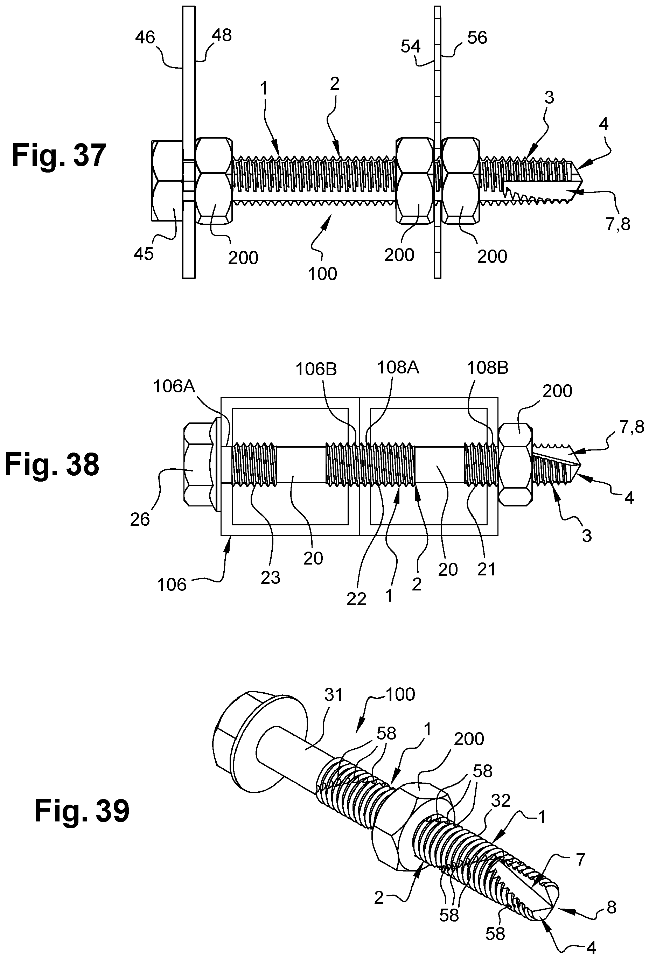

[Fig. 37] La figure 37 est une vue de côté d'un vingt-deuxième mode de réalisation d'une vis d'un boulon selon l'invention,
[Fig. 38] La figure 38 est une vue de côté d'un vingt-troisième mode de réalisation d'une vis d'un boulon selon l'invention,
[Fig. 39] La figure 39 est une vue en perspective d'un vingt-quatrième mode de réalisation d'une vis d'un boulon selon l'invention,

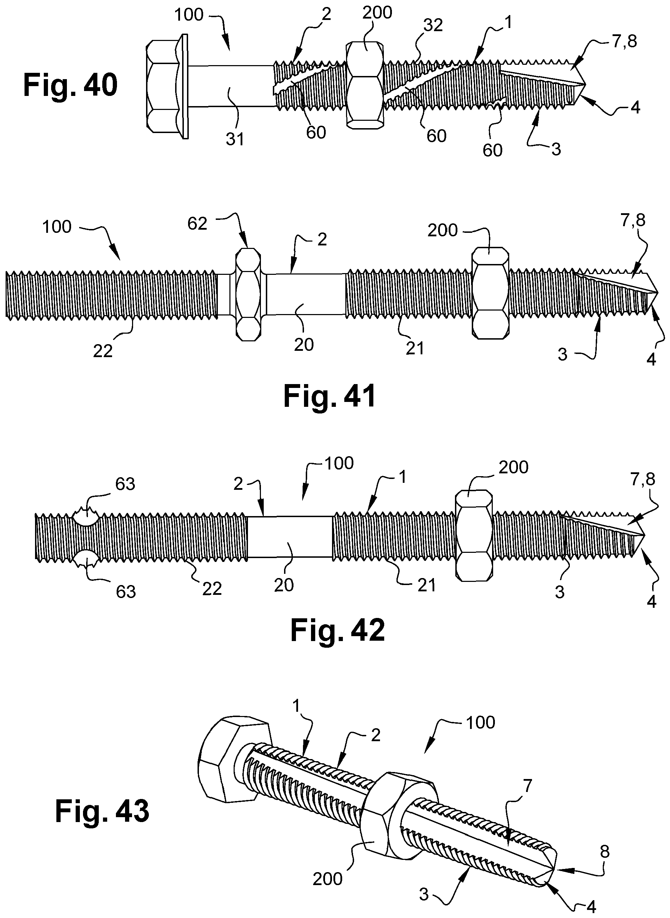

[Fig. 40] La figure 40 est une vue de côté d'un vingt-cinquième mode de réalisation d'une vis d'un boulon selon l'invention,
[Fig. 41] La figure 41 est une vue de côté d'un vingt-sixième mode de réalisation d'une vis d'un boulon selon l'invention,
[Fig. 42] La figure 42 est une vue de côté d'un vingt-septième mode de réalisation d'une vis d'un boulon selon l'invention,
[Fig. 43] La figure 43 est une vue en perspective d'un vingt-huitième mode de réalisation d'une vis d'un boulon selon l'invention,

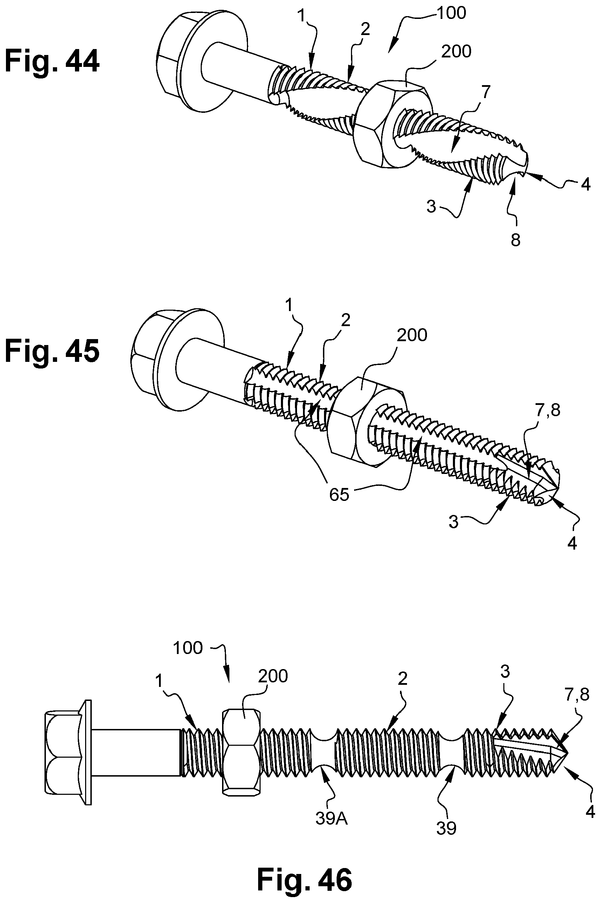

[Fig. 44] La figure 44 est une vue en perspective d'un vingt-neuvième mode de réalisation d'une vis d'un boulon selon l'invention,
[Fig. 45] La figure 45 est une vue en perspective d'un trentième mode de réalisation d'une vis d'un boulon selon l'invention,
[Fig. 46] La figure 46 est une vue en perspective d'un trente-et-unième mode de réalisation d'une vis d'un boulon selon l'invention,

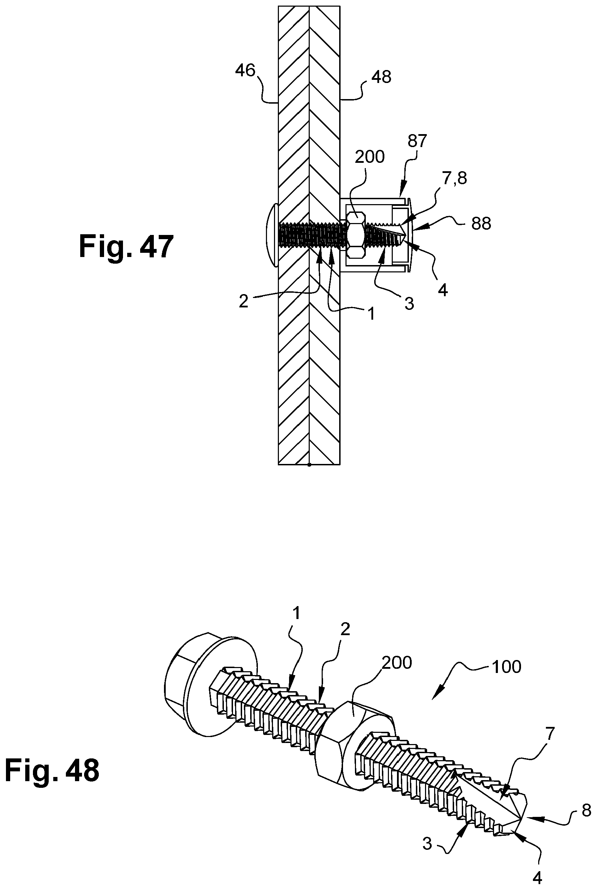

[Fig. 47] La figure 47 est une vue de côté d'un trente-deuxième mode de réalisation d'une vis selon l'invention, qui est insérée dans une épaisseur de matériau moyennement dur, montrant l'écrou vissé sur la pointe foret une fois l'assemblage réalisé, et un réceptacle maintenu en place par l'écrou vissé.
[Fig. 48] La figure 48 est une vue en perspective d'un trente-troisième mode de réalisation d'une vis d'un boulon selon l'invention.

Un boulon auto-perceur 100 selon l'invention comprend une vis auto-perceuse 1 et un écrou 200 destiné à être vissé sur ladite vis auto-perceuse 1. La vis auto-perceuse 1 comprend un corps allongé 2 qui est prolongé par une pointe foret 3 filetée, se terminant par une extrémité 4 lisse et de forme conique. Autrement dit, la pointe foret 3 est insérée entre le corps 2 de la vis 1 et l'extrémité lisse 4. Le terme « extrémité lisse » signifie que ladite extrémité 4 est dépourvue de relief et donc d'un filetage. L'écrou 200 est un écrou courant du marché, ayant un trou taraudé rond réalisé de manière usuelle.

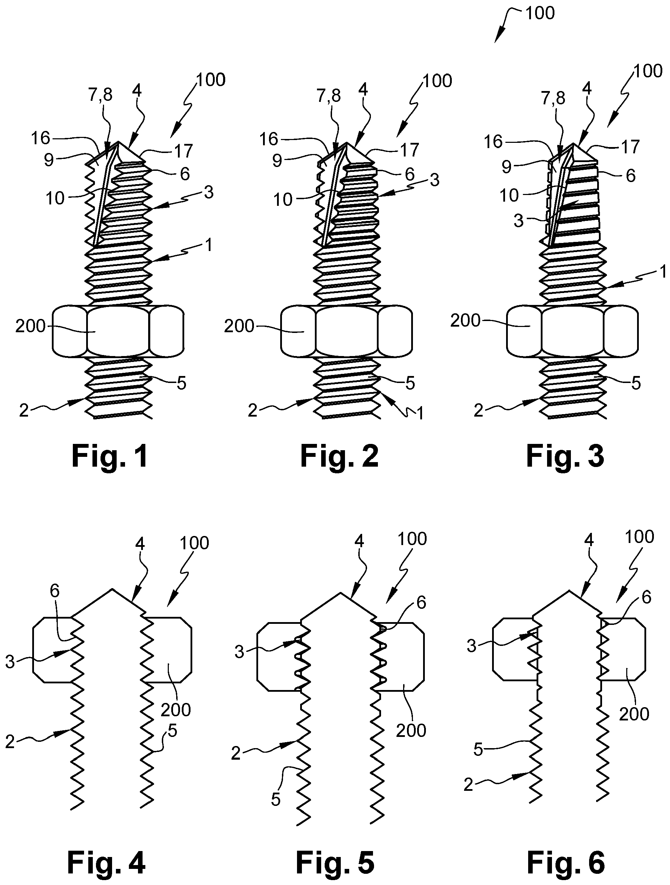

L'originalité d'un boulon auto-perceur 100 selon l'invention, est que l'écrou 200 peut être vissé autour de la pointe foret 3 filetée. Généralement, le corps 2 de la vis 1 est cylindrique et comporte au moins sur une partie de sa longueur, un filetage 5 bien formé autour duquel est destiné à venir se visser un écrou 200. L'extrémité 4 de la vis 1 est de forme conique. La pointe foret 3 peut se décliner sous différentes configurations :
- elle peut présenter un filetage bien formé et constituer une parfaite extension du corps 2 fileté sans que l'on puisse faire de différence entre ledit corps 2 et ladite pointe foret 3, comme l'illustrent les figures 1 et 4. Pour cette configuration, le diamètre intérieur du corps 2 et le diamètre intérieur de la pointe foret 3 sont égaux. De même, le diamètre extérieur du filetage 5 du corps 2 et le diamètre extérieur du filetage 6 de la pointe foret 3 sont égaux. Avec ce type de géométrie, la vis 1 ne pourra percer que de faibles épaisseurs, typiquement inférieures à 1 mm, d'un matériau dur tel que par exemple de l'acier, puisque seule l'extrémité conique 4 va participer à ce perçage,
- elle peut présenter un filetage moyennement formé, comme l'illustrent les figures 2 et 5. Pour cette configuration, le diamètre intérieur du corps 2 et le diamètre intérieur de la pointe foret 3 sont égaux. En revanche, le diamètre extérieur du filetage 5 du corps 2 est supérieur au diamètre extérieur du filetage 6 de la pointe foret 3. Les dents du filetage 6 de la pointe foret 3 sont moins formées que les dents du filetage 5 du corps cylindrique 2. Avec ce type de géométrie, la vis 1 peut percer une épaisseur d'un matériau dur pouvant par exemple atteindre 2,5mm puisqu'une petite partie de la pointe foret 3 qui prolonge l'extrémité conique 4 va également participer au perçage du matériau ,
- elle peut présenter un filetage 6 faiblement formé, c'est-à-dire moins formé que le filetage moyennement formé de la configuration précédente, comme l'illustrent les figures 3 et 6. Pour cette configuration, le diamètre intérieur du corps 2 et le diamètre intérieur de la pointe foret 3 sont égaux. En revanche, le diamètre extérieur du filetage 5 du corps 2 est nettement supérieur au diamètre extérieur du filetage 6 de la pointe foret 3. Les dents du filetage 6 de la pointe foret 3 sont beaucoup moins formées que les dents du filetage 5 du corps cylindrique 2, et dans ce cas, la vis 1 peut percer une épaisseur d'un matériau dur, par exemple supérieure à 2,5mm, puisqu'une grande partie de la pointe foret 3 qui prolonge l'extrémité conique 4 va également participer au perçage du matériau dur.

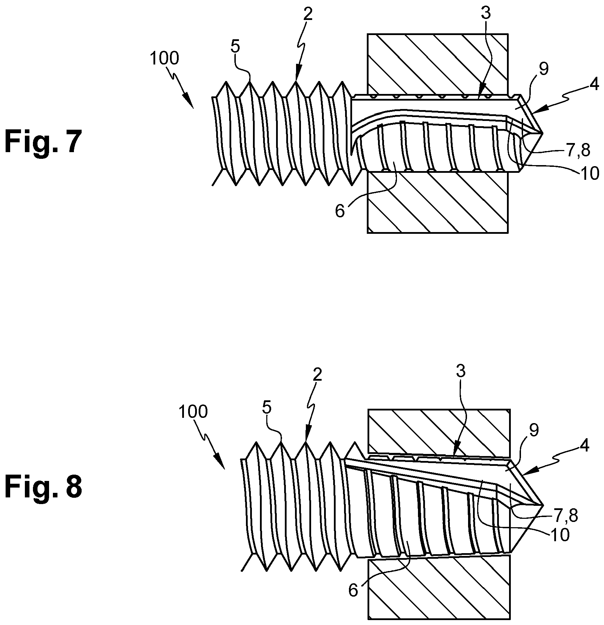

En se référant à la figure 7, la pointe foret 3 peut être rigoureusement de forme cylindrique sur toute sa longueur.

En se référant à la figure 8, selon un autre mode de réalisation, la pointe foret 3 peut être de forme légèrement tronconique, le diamètre extérieur de ladite pointe foret 3 diminuant progressivement depuis une extrémité de ladite pointe foret 3 qui est en contact avec le corps cylindrique 2, jusqu'à une extrémité de celle-ci qui est en contact avec l'extrémité lisse 4 de forme conique.

En se référant aux figures 1 à 3, 7, et 8, une vis 1 d'un boulon auto-perceur 100 selon l'invention, est qu'elle possède deux rainures 7, 8 s'étendant depuis la périphérie d'une première extrémité de pointe foret 3 qui est en contact avec le corps 2 cylindrique, jusqu'à une deuxième extrémité correspondant au bout de l'extrémité 4 lisse et conique 4. De cette manière, chaque rainure 7, 8 s'étend sur la totalité de la longueur de la pointe foret 3 et sur la totalité de la longueur de l'extrémité 4 conique. Chaque rainure 7, 8 présente une profondeur variable, croissant régulièrement depuis la première extrémité de la pointe 3 jusqu'à la deuxième extrémité de ladite pointe foret 3, la profondeur constituant la dimension de la rainure 7, 8 considérée le long d'un axe radial de la pointe foret 3. De même, la largeur de chaque rainure 7, 8 croît régulièrement depuis la première extrémité de la pointe foret 3, jusqu'à la deuxième extrémité de ladite pointe foret 3, la largeur constituant la dimension de la rainure 7, 8 considérée le long de la circonférence de la pointe foret 3. Schématiquement, chaque rainure 7, 8 est délimitée par deux parois 9, 10 reliées l'une à l'autre par une ligne d'intersection s'étendant le long d'un axe longitudinal de la vis 1 et reliant la périphérie de la première extrémité de la pointe foret 3 à la deuxième extrémité de ladite pointe foret 3, ladite ligne d'intersection matérialisant la profondeur de la rainure 7, 8 dans la vis 1.

Les deux rainures 7, 8 sont disposées sur la vis 1 en étant diamétralement opposées et parfaitement séparées l'une de l'autre par des épaisseurs de matière 14, 15 (cf. figure 9). Chacune des rainures 7, 8 présente un bord coupant 16, 17 dans l'extrémité conique 4, chacun desdits deux bords 16, 17 jouant le rôle de lèvres de coupe destinées à favoriser le perçage du matériau dur dans lequel est destinée à se fixer la vis 1.

Les rainures 7, 8 créées dans la pointe foret 3 et dans l'extrémité conique 4 de la vis 1 d'un boulon 100 auto-perceur selon l'invention, ont une triple fonction :
- rendre la pointe foret 3 de la vis 1 plus effilée, de manière à favoriser le perçage d'une épaisseur de matériau,
- évacuer une partie du matériau dans lequel est insérée la vis 1, lorsque celle-ci pivote autour de son axe de révolution à grande vitesse pour réaliser l'opération de perçage,
- favoriser le perçage d'un matériau grâce à la présence des lèvres de coupe 16, 17 délimitant ladite rainure 7, 8.

Les lèvres de coupe 16, 17 créées lors de la réalisation des deux rainures 7, 8 dans la vis 1, agissent comme un foret de perçage classique, trouvé sur les vis auto-perceuses actuelles. Il est important de rappeler que l'extrémité lisse 4 est dépourvue de filetage. Les lèvres de coupe 16, 17 permettent de trancher et percer les épaisseurs de matériau dans lesquelles seront posés les boulons 100 auto-perceurs selon l'invention.

En se référant aux figures 10 et 11, l'extrémité conique 4 possède un angle d'inclinaison α variable en fonction notamment de l'épaisseur de matériau dur à percer. Cet angle α est compris entre 20° et 170°. Avec une extrémité lisse 4 plus pointue, correspondant par exemple à un angle α proche de 20°, il sera plus facile de percer des épaisseurs de matériau dur plus importantes.

La pointe de la vis présente des lèvres de coupe formant un angle alpha α compris entre 20° et 170°.

En se référant à la figure 12, selon un autre mode de réalisation d'un boulon auto-perceur selon l'invention, l'extrémité lisse 4 comprend une embase 18 tronconique élargie prolongée par un tronçon conique 19 se terminant en pointe. L'angle d'inclinaison de l'embase tronconique 18 par rapport à l'axe de révolution de l'extrémité lisse 4 est inférieur à l'angle d'inclinaison α du tronçon conique 19 par rapport audit axe de révolution. Les angles w et α apparaissant sur la figure 12 représentent respectivement le double de ces angles. Pour ce mode de réalisation, l'angle w est inférieur à l'angle α. En effet, pour un perçage plus aisé d'un métal, il est préférable d'avoir une extrémité 4 pas trop pointue, afin d'avoir une extrémité 4 possédant une bonne pénétration avec l'angle le moins fermé α, et une bonne coupe avec l'angle le plus fermé w.

En se référant à la figure 12bis, selon un autre mode de réalisation d'un boulon auto-perceur selon l'invention, l'extrémité lisse 4 comprend une embase 18 tronconique élargie prolongée par un tronçon conique 19 se terminant en pointe. L'angle d'inclinaison de l'embase tronconique 18 par rapport à l'axe de révolution de l'extrémité lisse 4 est supérieur à l'angle d'inclinaison α du tronçon conique 19 par rapport audit axe de révolution. Les angles w et α apparaissant sur la figure 12 représentent respectivement le double de ces angles. Pour ce mode de réalisation, l'angle w est supérieur à l'angle α.

En se référant à la figure 13, selon une variante de réalisation d'un boulon auto-perceur 100 selon l'invention, le corps 2 de la vis 1 est partiellement fileté, de sorte qu'une zone non filetée 20 dudit corps 2 soit encadrée par deux zones filetées 21, 22 de celui-ci, un écrou 200 étant monté sur chacune desdites deux zones filetées 21, 22.

En se référant à la figure 14, selon une autre variante de réalisation d'un boulon auto-perceur 100 selon l'invention, le corps 2 est entièrement fileté et un écrou 200 est monté sur ledit corps 2, ledit écrou 200 ayant une tête taraudée séparée pour l'entrainement en rotation.

En se référant à la figure 15, selon une autre variante de réalisation d'un boulon auto-perceur 100 selon l'invention, le corps 2 est entièrement fileté et un écrou 200 est monté sur ledit corps 2. Pour ce mode de réalisation, un écrou borgne 26 est vissé à une extrémité du corps 2 qui est opposée à la pointe foret 3, possédant les deux rainures 7, 8, permettant l'entrainement en rotation de la vis 1, pour le perçage et le serrage.

En se référant à la figure 16, selon une autre variante de réalisation d'un boulon auto-perceur 100 selon l'invention, le corps 2 est entièrement fileté et possède à l'une de ses extrémités qui est opposée à celle possédant les deux rainures 7, 8, une empreinte creuse 27 d'entrainement incluse dans ledit corps 2 et destinée à recevoir la pointe d'un outil conçu pour mettre en rotation la vis 1 autour de son axe de révolution. Un écrou 200 est monté sur le corps 2 fileté de la vis 1.

En se référant à la figure 17, selon une autre variante de réalisation d'un boulon auto-perceur 100 selon l'invention, le corps 2 est entièrement fileté et possède à l'une de ses extrémités qui est opposée à celle possédant les deux rainures 7, 8, un embout d'entrainement saillant 28 par l'intermédiaire duquel sera entrainée en rotation la vis 1 autour de son axe de révolution. Un écrou 200 est monté sur le corps 2 fileté de la vis 1.

En se référant à la figure 19, il est possible à partir d'une ébauche de vis 1 possédant un corps 2 cylindrique lisse et un embout d'entrainement 29, par exemple de forme parallélépipédique et saillant dudit corps lisse 2, comme illustré à la figure 18, de fabriquer simplement et lors d'une même opération, une vis 1 possédant un corps 2 entièrement fileté et un embout 29 seulement fileté à ses sommets. De cette manière, un écrou 200 pourra alors se visser sur l'embout d'entrainement 29 fileté à ses sommets. Cette perspective est intéressante, car pour un bon entrainement en rotation ou pour un bon maintien de la douille d'entrainement, la taille de l'embout d'entrainement 29 ne doit pas être trop petite surtout pour des grandes longueurs de vis 1.

En se référant à la figure 20, selon une autre variante de réalisation d'un boulon auto-perceur 100 selon l'invention, la vis 1 possède une butée 30. Plus précisément, le corps 2 de la vis 1 présente un segment lisse 31 et un segment fileté 32 prolongé par la pointe foret 3 et l'extrémité lisse 4 dotées des deux rainures 7, 8, le diamètre extérieur dudit segment lisse 31 étant supérieur à celui dudit segment fileté 32. La butée 30 est constituée par l'épaulement créé par cette différence de diamètre. L'épaisseur 33 de matériau à percer se retrouve ainsi coincé entre ladite butée 30 et un écrou 200 qui aura été vissé sur le segment fileté 32 du corps 2.

En se référant aux figures 21 et 22, selon une autre variante de réalisation d'un boulon auto-perceur 100 selon l'invention, la vis 1 peut comporter une butée 35 ayant deux fonctions :
- une fonction de perçage, pour par exemple percer une première tôle 36, comme illustré à la figure 21,
- une fonction de butée contre une deuxième tôle 37 pour stopper la course de la vis 1 une fois que ladite butée 35 a transpercé la première tôle 36, comme illustré à la figure 22.

De cette manière, la vis 1 d'un boulon auto-perceur 100 selon l'invention, permet de fixer la première tôle 36 à la deuxième tôle 37, lesdites deux tôles 36, 37 étant parallèles et séparées et ladite vis 1 s'étendant perpendiculairement auxdites deux tôles 36, 37.

En se référant aux figures 23 et 24, selon deux autres variantes de réalisation d'un boulon auto-perceur 100 selon l'invention, ladite vis 1 comporte un corps 2 présentant un segment lisse 31 et un segment fileté 32 prolongé par la pointe foret 3 et l'extrémité lisse 4 dotées des deux rainures 7, 8. La spécificité de ces vis 1, est qu'elles comportent des ailettes 40, 41 saillantes, pouvant être placées sur le segment lisse 31 à proximité du segment fileté 32 comme illustré à la figure 24, ou dans une zone située entre le segment fileté 32 et la pointe foret 3, comme illustré à la figure 23. Ces ailettes 40, 41 permettent d'aléser un premier élément qui peut par exemple être du bois, afin de ne pas brûler le bois et/ou la vis1, lorsque l'extrémité lisse 4 arrive au contact du support métallique qu'elle doit percer ensuite, surtout pour des épaisseurs importante de métal. Les ailettes 40 sont conçues pour se casser au contact dudit support métallique.

En se référant à la figure 25, selon une autre variante de réalisation d'un boulon auto-perceur 100 selon l'invention, la vis 1 comprend une gorge 38 comprise entre la pointe foret 3 filetée dotée des deux rainure 7, 8 et un segment fileté 32 du corps 2 de la vis 1. La pointe foret 3 et le segment fileté 32 ont le même diamètre extérieur tandis que la gorge 38 possède un diamètre extérieur qui est inférieur à celui de ladite pointe foret 3 et dudit segment fileté 32.

En se référant aux figures 26 et 27, selon une variante de réalisation d'un boulon auto-perceur 100 selon l'invention, la vis 1 comporte une gorge de rupture 39, qui est placée entre le corps 2 fileté et la pointe foret 3 comportant les deux rainures 7, 8. Cette gorge 39 présente la particularité d'être d'un faible diamètre comparativement à celui dudit corps fileté 2 et à celui de ladite pointe foret 3 comme cela est illustré à la figure 26. En se référant à la figure 27, une fois que la vis 1 se retrouve dans sa position définitive dans l'épaisseur de matériau qu'elle vient de percer, ladite vis 1 peut être rompue au niveau de la gorge de rupture 39 afin de retirer la pointe foret 3 ainsi que l'extrémité lisse 4. En effet, ladite pointe foret 3 et ladite extrémité lisse 4 saillent de ladite épaisseur de matériau, et peuvent constituer des éléments susceptibles de causer des blessures. Grâce à la présence de cette gorge de rupture 39, ces deux éléments 3, 4 peuvent être retirés facilement.

En se référant à la figure 28, selon une autre variante de réalisation d'une vis selon l'invention, la vis 1 comprend un manchon 42 taraudé qui est vissé sur le corps 2 fileté de ladite vis 1. De cette manière, une fois que la vis 1 a percé l'épaisseur 43 de matériau dur, ladite épaisseur 43 se retrouve prise entre un écrou 200 qui est vissé sur le corps 2 fileté et ledit manchon 42, ledit écrou 44 et ledit manchon 42 pouvant alors exercer une pression de serrage sur ladite épaisseur 43 de matériau dur. Il est à noter que le corps 2 émergeant de l'épaisseur 43 de matériau dur est différent de celui du corps fileté 2 situé à l'intérieur de ladite épaisseur 43. Le manchon 42 fait la jonction entre lesdits deux corps 2.

En se référant à la figure 29, une fois que la vis 1 a percé une épaisseur de matériau dur, une tête élargie 45 de ladite vis 1 vient en appui contre une première face 46 de ladite épaisseur, et un écrou 200 qui est vissé sur le corps fileté 2 de ladite vis 1 vient en appui contre une deuxième face 48 de cette épaisseur qui est parallèle à ladite première face 46. De cette manière, une partie du corps fileté 2, la pointe foret 3 et l'extrémité lisse 4 saillent de l'écrou 200.

En se référant à la figure 30, par rapport à la configuration ci-avant décrite, comme la pointe foret 3 est filetée, il est possible, quelle que soit la longueur de la vis 1, et l'épaisseur des matériaux à percer, de venir visser l'écrou 200 sur la pointe foret 3 et d'effectuer le serrage de l'ensemble alors même que l'écrou 200 est sur la pointe foret 3 filetée.
La tête élargie 45 de la vis 1 est toujours en appui contre la première face 46 de l'épaisseur de matériau, et l'écrou 200 qui est vissé sur la pointe foret 3 de ladite vis 1 vient en appui contre la deuxième face 48 de cette épaisseur. De cette manière, seule l'extrémité lisse et conique 4 de la vis 1 émerge de l'écrou 200.

On notera que dans les variantes de réalisation qui ont été décrites jusqu'ici, le filetage 6 de la pointe foret 3 est prolongé jusqu'à l'extrémité lisse 4. En d'autres termes, la pointe foret 3 est dépourvue d'une quelconque portion non filetée adjacente à l'extrémité lisse 4.

En se référant aux figures 31 et 32, selon deux autres variantes de réalisation d'un boulon auto-perceur 100 selon l'invention, ladite vis 1 comporte un corps 2 présentant un segment lisse 31 et un segment fileté 32 prolongé par la pointe foret 3 et l'extrémité lisse 4 dotées des deux rainures 7, 8. La spécificité de ces vis 1, est que le corps 2 possède à l'une de ses extrémités qui est opposée à celle possédant les deux rainures 7, 8, une portion cintrée 48, 49. Un écrou 200 est monté sur le corps 2 fileté de la vis 1. La portion cintrée peut permettre d'entraîner en rotation la vis 1 autour de son axe de révolution à l'aide d'un organe de mise en rotation d'une machine électroportative. La portion cintrée peut présenter diverses géométries selon les besoins. À titre d'exemple, la portion cintrée 48 sur la figure 31 est en forme de boucle, et la portion cintrée 49 sur la figure 32 est en forme de crochet. Avantageusement, au moins une butée 47 est formée sur le segment lisse 31.

En se référant à la figure 33, selon une autre variante de réalisation d'un boulon auto-perceur 100 selon l'invention, le corps 2 est entièrement fileté et possède à l'une de ses extrémités qui est opposée à celle possédant les deux rainures 7, 8, un embout d'entrainement saillant 50 par l'intermédiaire duquel sera entrainée en rotation la vis 1 autour de son axe de révolution. Un écrou 200 est monté sur le corps 2 fileté de la vis 1. L'embout d'entrainement 50 comporte une empreinte creuse 51 destinée à recevoir la pointe d'un outil conçu pour mettre en rotation la vis 1 autour de son axe de révolution. L'empreinte creuse 51 peut être taraudée. L'embout d'entrainement 50 peut présenter un contour extérieur polygonal, notamment hexagonal, afin de pouvoir être entraîné par une clef de serrage ou un outil de serrage analogue.

En se référant aux figures 34 à 36, selon une autre variante de réalisation d'un boulon auto-perceur 100 selon l'invention, ladite vis 1 comporte un corps 2 présentant un segment lisse 31 et un segment fileté 32 prolongé par la pointe foret 3 et l'extrémité lisse 4 dotées des deux rainures 7, 8. La spécificité de cette vis 1, est que le corps 2 possède à l'une de ses extrémités qui est opposée à celle possédant les deux rainures 7, 8, une tête 52 qui est filetée et qui comporte une empreinte creuse 53 destinée à recevoir la pointe d'un outil conçu pour mettre en rotation la vis 1 autour de son axe de révolution.

En se référant à la figure 36, une telle vis 1 peut permettre de percer une première tôle 36 puis une deuxième tôle 37, puis de visser sur la tête filetée 52 un troisième élément 36A, tel qu'un panneau (notamment en bois) ou un chevron (notamment en bois), espacé de la deuxième tôle 37 et de la deuxième tôle 36. La tête filetée 52 peut présenter un diamètre extérieur et/ou un pas de filetage différents de ceux du segment fileté 32. Dans l'exemple représenté, la tête filetée 52 présente un diamètre extérieur et un pas de filetage plus grands que ceux du segment fileté 32.

En se référant à la figure 37, selon une autre variante de réalisation qui est une modification de la variante de réalisation représentée sur la figure 29, le corps 2 est entièrement fileté et plusieurs écrous 200 sont vissés à différentes positions sur le corps 2 jusque sous la tête élargie 45 de ladite vis 1. Ainsi, une fois que la vis 1 a percé deux épaisseurs successives de matériau dur, la tête élargie 45 de la vis 1 vient en appui contre une première face 46 de la première épaisseur, l'un des écrous 200 qui est vissé sur le corps fileté 2 de ladite vis 1 vient en appui contre une deuxième face 48 de la première épaisseur, et deux autres écrous 200 vissés sur le corps fileté 2 viennent respectivement en appui contre les deux faces 54, 56 de la deuxième épaisseur. Ce principe peut être généralisé à un nombre quelconque d'épaisseurs de matériau dur. Il est ainsi possible de visser autant d'écrous 200 que nécessaire pour positionner les éléments représentés.

En se référant à la figure 38, selon une autre variante de réalisation qui est une modification de la variante de réalisation représentée sur la figure 13, le corps 2 de la vis 1 est partiellement fileté, de sorte que le corps 2 comporte deux zones non filetées 20 chacune encadrée par deux zones filetées 21, 22 ou 22, 23. En outre, un écrou borgne 26 est vissé à une extrémité du corps 2 qui est opposée à la pointe foret 3, possédant les deux rainures 7, 8, permettant l'entrainement en rotation de la vis 1, pour le perçage et le serrage. De cette manière, la vis 1 peut percer successivement une première pièce creuse 106 et une deuxième pièce creuse 108, après quoi l'écrou 200 est vissé sur la pointe foret 3 pour être en appui sur la deuxième pièce creuse 108, tandis que l'écrou borgne 26 est en appui sur la première creuse 106. Les pièces creuses 106, 108 peuvent par exemple être des tubes. Avantageusement, les zones non filetées 20 sont positionnées de telle sorte qu'elles s'étendent à travers les trous de perçage 106A, 106B, 108A successivement réalisés par la pointe foret 3 pendant que la pointe foret 3 réalise le trou de perçage suivant 106B, 108A, 108B. Ainsi, les zones non filetées 20 évitent que les zones filetées 21, 22, 23 n'interfèrent avec le perçage.

En se référant à la figure 39, selon une autre variante de réalisation qui est une modification de la variante de réalisation représentée sur la figure 20, le corps 2 de la vis 1 comporte des zones spéciales en creux 58, qui sont non jointives et matérialisent des interruptions locales du filetage du segment fileté 32 et de la pointe foret 3 prolongeant le segment fileté 32. Ces zones spéciales en creux 58 peuvent être disposées de manière hélicoïdale le long du corps 2 comme représenté sur la figure 39. Les zones spéciales en creux 58 tendent à améliorer les opérations de pénétration du boulon auto-perceur 100 dans les matériaux à percer.

En se référant à la figure 40, selon encore une autre variante de réalisation qui est une modification de la variante de réalisation représentée sur la figure 20, le corps 2 de la vis 1 comporte une ou plusieurs rainures 60, qui matérialisent des interruptions locales du filetage du segment fileté 32 et de la pointe foret 3 prolongeant le segment fileté 32. Les rainures 60 peuvent être hélicoïdales comme représenté sur la figure 40. Les rainures 60 constituent chacune une gorge apte à recevoir les copeaux ou particules issues du matériau percé par le boulon auto-perceur 100, ce qui tend à éviter un bourrage du boulon auto-perceur 100 lors du perçage. On notera que dans cette variante de réalisation, les rainures 60 ne débouchent pas dans les rainures 7, 8.

Il est à noter que les autres variantes de réalisation décrites ci-avant ou ci-après peuvent également présenter des zones spéciales en creux 58 et/ou des rainures 60.

En se référant à la figure 41, selon une autre variante de réalisation d'un boulon auto-perceur 100 selon l'invention, le corps 2 de la vis 1 est partiellement fileté, de sorte qu'une zone non filetée 20 dudit corps 2 soit encadrée par deux zones filetées 21, 22 de celui-ci, un écrou 200 étant monté sur la zone filetée 21, et un autre écrou 200 (non représenté) étant éventuellement monté sur la zone filetée 22. La zone non filetée 20 comporte un élément d'entraînement en rotation 62 destiné à interagir avec un embout d'un outil conçu pour mettre en rotation la vis 1 autour de son axe de révolution. L'élément d'entraînement en rotation 62 peut présenter un contour extérieur polygonal, notamment hexagonal comme représenté sur la figure 41.

La figure 42 représente encore une autre variante de réalisation d'un boulon auto-perceur 100 selon l'invention. Cette variante de réalisation diffère de celle de la figure 41 en cela que l'élément d'entraînement 62 est remplacé par des ailettes d'entraînement en rotation 63 ménagées sur la zone filetée 22. Dans l'exemple représenté, les ailettes d'entraînement en rotation 63 sont au nombre de deux et diamétralement opposées l'une par rapport à l'autre. En variante, un plus grand nombre d'ailettes d'entraînement en rotation 63 peut être prévu.

En se référant à la figure 43, alternativement à ce qui a été décrit ci-dessus en référence aux figures 1 à 3, 7, et 8, les deux rainures 7, 8 peuvent s'étendre depuis la périphérie d'une première extrémité du corps 2, jusqu'à une deuxième extrémité correspondant au bout de l'extrémité 4. De cette manière, chaque rainure 7, 8 s'étend sur la totalité de la longueur du corps 2, sur la totalité de la longueur de la pointe foret 3, et sur la totalité de la longueur de l'extrémité 4. De cette manière, les rainures 7, 8 favorisent davantage le perçage d'une épaisseur de matériau et tendent à davantage évacuer une partie du matériau dans lequel est insérée la vis 1 pendant l'opération de perçage. Les rainures 7, 8 sont sinon identiques à ce qui a été décrit précédemment et ne sont donc pas décrites à nouveau.

Comme on l'a mentionné ci-dessus, les deux rainures 7, 8 sont disposées sur la vis 1 en étant diamétralement opposées et parfaitement séparées l'une de l'autre. Ceci peut être obtenu en prévoyant que les rainures 7, 8 sont rectilignes, comme représenté notamment sur la figure 43. En alternative, les rainures 7, 8 peuvent être hélicoïdales comme représenté sur la figure 44.

La figure 45 représente encore une autre variante de réalisation d'un boulon auto-perceur 100 selon l'invention dans laquelle chacune des deux rainures 7, 8 s'étendant depuis la périphérie d'une première extrémité de la pointe foret 3 qui est en contact avec le corps 2, jusqu'à une deuxième extrémité correspondant au bout de l'extrémité 4, est prolongée par une rainure supplémentaire 65. Les rainures supplémentaires 65 sont formées sur le corps 2 de façon à déboucher à l'une de leurs extrémités dans l'une des rainures 7, 8. Dans l'exemple représenté, les rainures supplémentaires 65 sont rectilignes et s'étendent le long d'un axe longitudinal de la vis 1. Les rainures supplémentaires 65 favorisent davantage le perçage d'une épaisseur de matériau et tendent à davantage évacuer une partie du matériau dans lequel est insérée la vis 1 pendant l'opération de perçage.

En se référant à la figure 46, selon encore une autre variante de réalisation qui est une modification de la variante de réalisation représentée sur la figure 26, la vis 1 comporte, en plus de la gorge de rupture 39 placée entre le corps 2 fileté et la pointe foret 3 comportant les deux rainures 7, 8, une gorge de rupture supplémentaire 39A formée sur le corps 2 fileté. Comme la gorge de rupture 39, la gorge de rupture supplémentaire 39A est d'un faible diamètre comparativement à celui dudit corps fileté 2 et à celui de ladite pointe foret 3. Ainsi, une fois que la vis 1 se retrouve dans sa position définitive dans l'épaisseur de matériau qu'elle vient de percer, ladite vis 1 peut être rompue :
- ou bien au niveau de la gorge de rupture 39 afin de retirer la pointe foret 3 ainsi que l'extrémité lisse 4,
- ou bien au niveau de la gorge de rupture supplémentaire 39A afin de retirer non seulement la pointe foret 3 et l'extrémité lisse 4, mais aussi une partie du corps 2. Dans certaines variantes non représentées, plusieurs gorges de rupture supplémentaires 39A peuvent être formées sur le corps 2, ce qui permet de retirer différentes longueurs du corps 2 selon les besoins.

En se référant à la figure 47, alternativement à la configuration représentée sur la figure 30 où seule l'extrémité lisse et conique 4 de la vis 1 émerge de l'écrou 200, cette extrémité 4 et la pointe foret 3 peuvent être logées dans un réceptacle 87. Le réceptacle 87 est maintenu en appui par l'écrou 200 contre la deuxième face 48 de l'épaisseur de matériau. De cette manière, le réceptacle 87 protège contre d'éventuelles blessures causées par la pointe foret 3 et l'extrémité 4. Cette configuration est notamment utile pour l'assemblage de mobilier de jardin ou de jeux dans les parcs publics.

Le réceptacle 87 peut être obturé par un bouchon 88 qui, en plus de davantage protéger contre d'éventuelles blessures causées par la pointe foret 3 et l'extrémité 4, tend à empêcher d'accéder facilement à l'écrou 200 pour démonter l'assemblage. Le bouchon 88 et le réceptacle 87 peuvent être du type usuellement utilisé pour protéger et/ou camoufler des pièces saillantes susceptibles de causer des blessures.

Jusqu'ici, on n'a décrit et représenté que des vis auto-perceuses 1 dont le corps 2 est cylindrique. Toutefois, dans toutes les variantes de réalisation décrites ci-dessus, le corps 2 et la pointe foret 3 peuvent présenter d'autres sections, pourvu que l'écrou 200 puisse être vissé sur la vis auto-perceuse 1. Par exemple, le corps 2 et la pointe foret 3 peuvent présenter une section polygonale, notamment une section hexagonale comme représenté sur la figure 48. Bien entendu, les dimensions du corps 2 et de la pointe foret 3 s'inscrivent dans un cercle adapté au trou taraudé de l'écrou 200. En prévoyant que le corps 2 et la pointe foret 3 présentent une section polygonale, les facettes du corps 2 et de la pointe foret 3 laissent des espaces vides entre le trou taraudé formé par la pénétration de la vis auto-perceuse 1 dans le matériau lors du perçage. Ces espaces vides sont aptes à recevoir les copeaux ou particules issues du matériau percé par le boulon auto-perceur 100, ce qui tend à éviter un bourrage du boulon auto-perceur 100 lors du perçage.

On notera que dans les variantes de réalisation qui viennent d'être décrites, le filetage 6 de la pointe foret 3 est prolongé jusqu'à l'extrémité lisse 4.

Un procédé de fabrication d'une vis 1 d'un boulon auto-perceur 100 selon l'invention, comprend les principales étapes suivantes :
- une étape de fourniture d'une ébauche de vis 1 comprenant une tête élargie et une tige lisse, la tige lisse étant notamment cylindrique ou polygonale,
- une étape de matriçage de l'extrémité de la tige lisse pour obtenir une extrémité conique lisse 4 et les deux rainures 7, 8,
- une étape de roulage permettant d'obtenir un filetage sur la tige lisse pour former la pointe foret 3 filetée.

Un tel procédé peut également comprendre une étape d'ébavurage.

## Revendications

1. Boulon auto-perceur (100) comprenant une vis (1) auto-perceuse et un écrou (200) apte à être monté sur la vis (1) auto-perceuse, ladite vis (1) auto-perceuse comportant un corps (2) possédant au moins une zone filetée et prolongé par une pointe foret (3) dotée d'une extrémité lisse (4) et de forme pointue, **caractérisé en ce que** la pointe foret (3) comporte un filetage (6) pouvant accueillir l'écrou (200) de sorte que ledit écrou (200) puisse être vissé autour de ladite pointe foret (3).

2. Boulon auto-perceur selon la revendication 1, **caractérisée en ce que** le corps fileté (2) et la pointe foret (3) présentent chacun un filetage (5, 6) identique, ledit corps fileté (2) et ladite pointe foret (3) possédant des diamètres intérieurs égaux.

3. Boulon auto-perceur selon la revendication 1, **caractérisé en ce que** le corps fileté (2) présente un filetage (5) formé et la pointe foret (3) présente un filetage (6) moyennement formé, ledit corps fileté (2) et ladite pointe foret (3) possédant des diamètres intérieurs égaux.

4. Boulon auto-perceur selon la revendication 1, **caractérisé en ce que** le corps fileté (2) présente un filetage (5) formé et la pointe foret (3) présente un filetage (6) faiblement formé, ledit corps fileté (2) et ladite pointe foret (3) possédant un diamètre intérieur identique.

5. Boulon auto-perceur selon l'une quelconque des revendications 1 à 4, **caractérisé en ce que** la pointe foret (3) présente au moins une rainure (7, 8) s'étendant sur toute la longueur de ladite pointe (3) et de l'extrémité (4), et **en ce que** ladite rainure (7, 8) prend naissance à la périphérie d'une première extrémité de la pointe foret (3) en contact avec le corps fileté (2), ou prend naissance à la périphérie d'une première extrémité du corps fileté (2), et s'étend jusqu'à une deuxième extrémité correspondant au bout de l'extrémité (4).

6. Boulon auto-perceur selon la revendication 5, **caractérisé en ce que** l'extrémité (4) de la vis (1) comprend une paroi de forme conique et l'angle d'inclinaison de ladite paroi définissant cette extrémité (4) par rapport à l'axe de révolution de la vis (1) est compris entre 10° et 85°.

7. Boulon auto-perceur selon l'une quelconque des revendications 5 ou 6, **caractérisé en ce que** les bords de ladite au moins une rainure (7, 8) dans l'extrémité (4) sont coupants, si bien que ladite extrémité (4) définit des lèvres de coupe (16, 17) qui vont favoriser le perçage d'une épaisseur de matériau.

8. Boulon auto-perceur selon l'une quelconque des revendications 5 à 7, **caractérisé en ce que** la vis (1) possède deux rainures (7, 8) disposées l'une par rapport à l'autre de façon diamétralement opposée, et **en ce que** lesdites deux rainures (7, 8) sont séparées l'une de l'autre en étant distinctes.

9. Boulon auto-perceur selon la revendication 8, **caractérisé en ce que** les deux rainures (7, 8) sont rectilignes ou les deux rainures (7, 8) sont hélicoïdales.

10. Boulon auto-perceur selon l'une quelconque des revendications 5 à 9, **caractérisé en ce que** ladite rainure (7, 8) prend naissance à la périphérie d'une première extrémité de la pointe foret (3) en contact avec le corps fileté (2), et **en ce que** le corps fileté (2) comporte une rainure supplémentaire (65) débouchant dans ladite rainure (7, 8).

11. Boulon auto-perceur selon la revendication 1, **caractérisée en ce que** l'extrémité (4) de la vis (1) comprend une embase tronconique (18) élargie prolongée par un tronçon conique (19) se terminant en pointe, et **en ce que** l'angle d'inclinaison de l'embase tronconique (18) par rapport à l'axe de révolution de ladite extrémité (4) est inférieur à celui du tronçon conique (19) par rapport audit axe.

12. Boulon auto-perceur selon la revendication 1, **caractérisée en ce que** l'extrémité (4) de la vis (1) comprend une embase tronconique (18) élargie prolongée par un tronçon conique (19) se terminant en pointe, et **en ce que** l'angle d'inclinaison de l'embase tronconique (18) par rapport à l'axe de révolution de ladite extrémité (4) est supérieur à celui du tronçon conique (19) par rapport audit axe.

13. Boulon auto-perceur selon l'une quelconque des revendications 1 à 12, **caractérisé en ce que** la vis (1) auto-perceuse comprend au moins une gorge de rupture (39, 39A) de sorte que ladite vis (1) puisse être rompue au niveau de ladite gorge de rupture (39) et ne puisse plus constituer une protubérance nuisible.

14. Boulon auto-perceur selon la revendication 12, **caractérisé en ce qu'**une dite gorge de rupture (39) est placée entre le corps fileté (2) de la vis (1) auto-perceuse (1) et la pointe foret (3).

15. Boulon auto-perceur selon l'une quelconque des revendications 1 à 14, **caractérisé en ce que** la vis auto-perceuse (1) comprend au moins un élément d'élargissement (40, 41) saillant d'une surface externe de ladite vis (1) et destiné à élargir un trou que ladite vis (1) aura préalablement créé.
